# EUROPÄISCHE PATENTSCHRIFT

(11) **EP 0 842 628 B1**
(45) Veröffentlichungstag und Bekanntmachung des Hinweises auf die Patenterteilung: **23.08.2000**
(21) Anmeldenummer: 97118031.0
(22) Anmeldetag: 17.10.1997
(51) Int. Cl.: A47J 43/07

(54) **Deckel zum Verschliessen eines Nahrungsmittel aufnehmenden Arbeitsbehälters**
Lid locking a food processor bowl
Couvercle verrouillant le récipient d'un robot ménager

(30) Priorität: 09.11.1996 DE 19646327
(43) Veröffentlichungstag der Anmeldung: 20.05.1998
(73) Patentinhaber: Braun GmbH, Kronberg (DE)
(72) Erfinder: Lorenz, Marga, 60316 Frankfurt am Main (DE); Börger, Georg, 61449 Steinbach (DE); Kamprath, Karl-Heinz, 65207 Wiesbaden (DE)

(56) Entgegenhaltungen:
- DE-A- 3 641 902
- DE-B- 1 115 896
- GB-A- 2 081 072
- GB-A- 2 116 154
- US-A- 2 720 329
- US-A- 5 125 528

## Beschreibung

Die Erfindung betrifft einen Deckel zum Verschließen eines Nahrungsmittel aufnehmenden Arbeitsbehälters für eine elektrisch betriebene Küchenmaschine, wobei Arbeitsbehälter und Deckel aus einem Kunststoff ausgeformt sind, wobei der Deckel weiterhin an seinem Rand zum Verriegeln mit dem Arbeitsbehälter angeformte Befestigungselemente aufweist, die mit am Arbeitsbehälter entsprechend ausgebildete Verriegelungselemente einen Drehverschluß derart bilden, daß der Deckel dichtend mit dem Arbeitsbehälter verschließbar ist.

Ein derartiger Deckel ist beispielsweise gemäß der Programmübersicht 1995/96 "Braun - immer eine gute Idee", Seiten 18/19, durch die Küchenmaschine, Typ "Braun Multisystem, K 1000", bekannt, die von der Anmelderin selbst seit einigen Jahren vertrieben wird. Bei dieser Küchenmaschine gibt es sowohl im System 1 einen aus Polypropylen hergestellen Arbeitsbehälter, der durch einen aus Styrol/Acrylnitril (SAN) hergestellen durchsichtigen Deckel verschlossen ist. Der Deckel greift mit seinem Umfangsrand in den Arbeitsbehälter ein und wird über am äußeren Rand ausgebildeten Befestigungselmenten mit an der Innenseite des Arbeitsbehälters ausgebildeten Verriegelungselementen verschlossen. Deckel und Arbeitsbehälter sind aber über diesen Drehverschluß allerdings nicht gegeneinander derart verspannt, daß ein absolut dichter Topf entsteht.

Weiterhin ist in dem System 2 ein transparenter Arbeitsbehälter bekannt, der über seine Verriegelungseinrichtung ebenfalls mit den an einem Deckel ausgebildeten Befestigungselementen in Eingriff bringbar ist, so daß der Deckel den Arbeitsbehälter sicher verschließt. Deckel und Arbeitsbehälter bestehen aus dem gleichen Material, nämlich Styrol/Acrylnitril (SAN). Deckel und Arbeitsbehälter sind auch hier nicht gegeneinander fest verspannt, sondern der Drehverschluß dient lediglich als mit axialem Spiel versehene Verriegelungseinrichtung.

Schließlich ist noch bei diesem Küchenmaschinenset ein System 3 bekannt, das aus einem aus Glas hergestellten Arbeitsbehälter besteht, der von einem Deckel aus Acrylnitril/Styrol/Acrylester (ASA) dichtend verschließbar ist. Im Gegensatz zu den Systemen 1 und 2 muß bei dem Glasmixer der Deckel absolut dicht mit dem Arbeitsbehälter des Glasmixers verschlossen werden, damit nicht Flüssigkeiten beim Zerkleinern und Mixen austreten können. Um eine absolut dichte Verbindung zwischen dem Deckel und dem Arbeitsbehälter herzustellen, muß der Deckel daher verhältnismäßig fest gegen den Rand des Glasmixers gedrückt werden, was zu einer nicht unbeachtlichen Kraft zwischen den Befestigungselementen des Deckels und den Verriegelungselementen des Arbeitsbehälters führt. Dies geht sogar so weit, daß der Deckel kaum noch mit eigener Handkraft fest verschlossen werden kann. Weiterhin verschließen die Befestigungselemente und die Verriegelungselemente zu schnell.

Aus der DE-AS 1246183, der CH-284033, der GB-2007198 und der DE-3007915 A1 sind Deckel der verschiedensten Art für Küchenmaschinen bekannt, die zwar aus mehreren Teilen bestehen, eine Anpassung an unterschiedliche Sicherheitsvorschriften ist aber hier nicht vorgesehen.

Aufgabe der Erfindung ist es nun, einen Deckel für einen Arbeitsbehälter zu schaffen, dessen Befestigungselemente eine hohe Verschleißfestigkeit aufweisen, der im eigentlichen Deckelbereich transparent ausgebildet ist, der Falltests besser übersteht, als die herkömmlichen durchsichtigen Deckel und der dennoch leicht und kostengünstig herstellbar ist.

Diese Aufgabe wird durch die kennzeichnenden Merkmale des Patentanspruchs 1 gelöst. Durch den aus zwei verschiedenen Kunststoffmaterialien zusammengesetzten Deckel können nun die höher belasteten Abschnitte, wie die Befestigungselemente und der Randbereich des Deckels, aus hochfesterem Kunststoffmaterial hergestellt werden, während hingegen ein durchsichtiger scheibenförmiger Abschnitt aus einem weniger festen Kunststoffmaterial hergestellt ist. Eine derartige Lösung ist dann besonders vorteilhaft, wenn der Arbeitsbehälter ebenfalls durchsichtig und aus dem gleichen Material wie der scheibenförmige Abschnitt des Deckels besteht.

Hierdurch kann man sowohl durch den Deckel wie durch den Arbeitsbehälter auf die im Arbeitsbehälter befindlichen Nahrungsmittel schauen. Weiterhin werden durch den undurchsichtigen Rand des Deckels sichtbare Kanten in diesem Bereich am Arbeitsbehälter verdeckt.

Eine besonders einfache formschlüssige Verbindung zwischen dem Deckel und dem Arbeitsbehälter wird durch die Merkmale des Patentanspruchs 2 erreicht. Dabei können die Teile auf besonders einfache Weise durch Reibschweißen oder Spiegelschweißen miteinander verbunden werden. Beim Reibschweißen müssen allerdings die Materialien so aufeinander abgestimmt sein, daß ihre Schmelzpunkte nahezu auf gleicher Höhe liegen, d.h. die zu verwendenden Materialien müssen ähnliche Eigenschaften aufweisen.

Eine weitere formschlüssige Verbindung wird durch die Merkmale des Patentanspruchs 3 erreicht. Hierbei muß allerdings die Zusammensetzung des Klebers auf die Kunststoffmaterialien des Deckels abgestimmt sein, um eine absolut feste Klebeverbindung herzustellen.

Nach den Merkmalen des Patentanspruchs 4 werden beide Teile miteinander verspritzt, d.h., nachdem beispielsweise der scheibenförmige Abschnitt in einer Gießform ausgespritzt wurde, wird dieser Abschnitt in eine zweite Form eingelegt und der Ring an den scheibenförmigen Abschnitt angespritzt. Eine derartige Herstellung kann aber auch in einem einzigen Arbeitswerkzeug erfolgen.

Durch die Merkmale des Patentanspruchs 5 werden besonders gut miteinander verbindende Kunststoffe verwendet, wobei bei nicht eingefärbtem Styrol/Acrylnitril für den scheibenförmigen Abschnitt des Deckels diesesr Teil zusätzlich noch transparent ist, um so in den mit Nahrungsmitteln gefüllten Arbeitsbehälter hineinschauen zu können. Der Kunststoff Acrylnitril/Styrol/Acrylester (ASA) weist eine höhere Verschleißfestigkeit, geringere Sprödigkeit und eine etwa vierfach größere Schlagfestigkeit auf als der Werkstoff SAN des scheibenförmigen Abschnitts. Hierdurch weist der Randbereich beim Herunterfallen des Deckels eine wesentlich größere Stabilität auf und es werden auch so vorzeitige Brüche vermieden. Das Reibmoment zwischen den Befestigungs- und Verriegelungselementen wird erheblich herabgesetzt und aufgrund der höheren Festigkeit des Ringes hält der Drehverschluß den höheren Anforderungen besser stand.

Durch die Merkmale des Patentanspruchs 7 ist der Ring so ausgebildet, daß er beim Aufsetzen auf den Arbeitsbehälter dessen Rand den Arbeitsbehälter von außen umgreift. Hierbei müssen dann die Verriegelungselemente an der Außenwand des Arbeitsbehälters ausgebildet sein. Dies läßt auch eine einfachere Herstellung des Arbeitsbehälters zu. Wird das Kunststoffmaterial (ASA) des Ringes noch mit einem Farbstoff, vorzugsweise Weiß, eingefärbt, so sind vom scheibenförmigen Abschnitt her die an der Innenseite des Ringes ausgebildeten Befestigungselemente nicht mehr sichtbar. Gleiches gilt für die Verriegelungselemente und den Rand am Arbeitsbehälter, wenn der Deckel auf diesen aufgesetzt wird.

Durch die Merkmale des Patentanspruchs 8 läßt sich der Deckel leicht handhaben und er dient gleichzeitig beim Aufsetzen auf den Arbeitsbehälter als diejenige Betätigungseinrichtung, die einen zwischen Hauptschalter und Antriebsmotor ausgebildeten Zwischenschalter freigibt. Auf diese Weise wird vermieden, daß der Deckel bei noch laufendem Motor vom Arbeitsbehälter abgenommen werden kann. Dies vermeidet Verletzungen an dem im Arbeitsbehälter rotierenden Arbeitswerkzeug.

Durch die Merkmale des Patentanspruchs 9 wird bei der Verwendung einer aus wenig kompressiblem Material bestehenden Scheibendichtung dennoch eine elastische Wirkung an der Dichtung erreicht, wenn sich unter dieser am Deckel eine Rille befindet und wenn beim Verschließen des Arbeitsbehälters durch den Deckel in diesem Bereich der Rand des Deckels gegen die scheibenförmige Dichtung drückt. In diesem Fall kann dann die Dichtung elastisch nachgeben. Hierdurch wird bei geringer Drehkraft ein verhältnismäßig sanftes und dennoch dichtes Verschließen beider Teile möglich.

Ein Ausführungsbeispiel der Erfindung ist in der Zeichnung dargestellt und wird im folgenden näher beschrieben. Es zeigen:
- Fig. 1: Unteransicht auf den Deckel in Richtung Y gemäß Fig. 2,
- Fig. 2: Längsschnitt durch den Deckel gemäß der Schnittführung A-A nach Fig. 1,
- Fig. 3: Teilschnitt am Rand des Deckels gemäß der Schnittführung B-B, in vergrößertem Maßstab dargestellt und
- Fig. 4: Teilschnitt durch den Rand des Deckels gemäß dem in Fig. 2 dargestellten Ausschnitt X, allerdings in vergrößertem Maßstab.

Der Deckel 1 besteht aus einem kreis- und scheibenförmigen, zentralen Abschnitt 2, der vom radial äußeren Rand 19 nach Fig. 4 im wesentlichen zur Mittelinie 6 hin sich als Scheibenabschnitt 10 konisch verjüngt. Am radial äußeren Rand 19 ist an der Oberfläche 3 des Abschnitts 2 eine zunächst senkrecht verlaufende Ringstufe 4 ausgebildet, an die sich eine zur Mitte M des Abschnitts 2 hin gerichtete Ausnehmung 7 anschließt. An die Ausnehmung 7 schließt sich wiederum eine horizontal verlaufende Ringfläche 5 an, die bis zum radial äußeren Rand 19 verläuft.

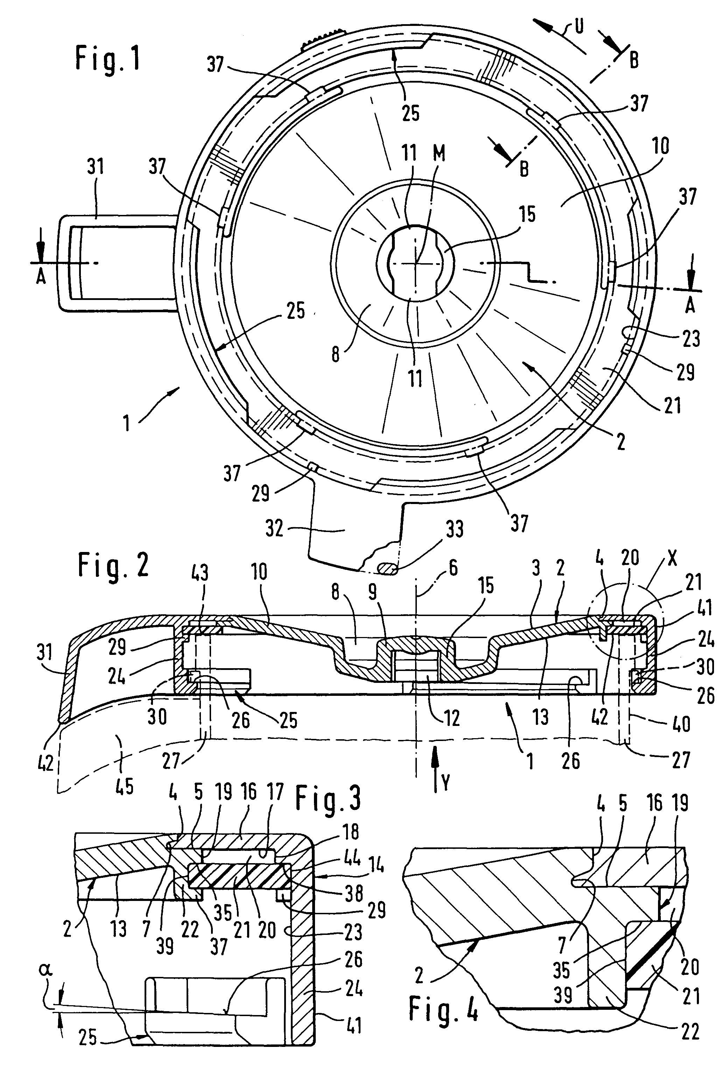

An den konisch zur Mittellinie 6 verlaufenden Scheibenabschnitt 10 schließt sich nach Figuren 1 und 2 eine konzentrisch zum Mittelpunkt M der Scheibe 2 verlaufende Rille 8 an, die zum Mittelpunkt hin in eine kreisförmige, hutähnliche Kappe 9 übergeht. Die Kappe 9 schließt von der Unterseite 13 des Scheibenabschnitts 10 eine zylindrische Ausnehmung 12 ein. Nach Fig. 1 ist der von der Kappe 9 gebildete zylindrische Wandabschnitt 15 radial zu beiden Seiten hin durchbrochen, so daß die so hergestellten Durchbrechungen 11 eine Verbindung von dem von der Rille 8 gebildeten Raum zum Raum 12 herstellen. Hierdurch können von der Oberseite 3 des Scheibenabschnitts 10 her Flüssigkeiten aufgegossen werden, die dann durch den konischen Verlauf des Scheibenabschnitts 10 in die Rille 8 gelangen und von dort über die Durchbrechungen 11 in den Raum 12 fließen, wo sie dann in den darunter befindlichen Arbeitsbehälter 27 abfließen. Der Arbeitsbehälter 27 ist in Fig. 2 gestrichelt dargestellt.

Gemäß den Figuren 2 bis 4 zentriert sich an der Ringstufe 4 ein kreisringförmiger Ring 14, der aus einem horizontal verlaufenden Ringabschnitt 16 und einem senkrecht dazu verlaufenden Ringabschnitt 24 besteht. Der Ring 14 stützt sich mit seiner Unterseite 17 an der Ringfläche 5 ab und ist sowohl mit dieser wie mit der Ausnehmung 7 formschlüssig verbunden. Dies kann durch Kleben, Schweißen, Pressen, Verklipsen oder durch Anspritzen erfolgen. An die Unterseite 17 schließt sich auf der radial äußeren Seite eine Ringstufe 18 an, der auf der anderen Seite der ringförmige Rand 19 gegenübersteht. Der Rand 19 und die Ringstufe 18 schließen eine im Querschnitt im wesentlichen rechteckförmige Rille 20 ein, die kreisringförmig ausgebildet ist und deren Auflageflächen 35, 38 horizontal und auf einer Höhe liegen, so daß sich an diesen Flächen 35, 38 eine im Querschnitt rechteckförmige Scheibendichtung 21 in Form eines Ringes abstützt.

Die Scheibendichtung 21 wird an der Innenseite 39 über einen am Abschnitt 2 ausgebildeten Ringwulst 22 und an der Außenseite 44 über die zylindrische Innenwand 23 des Ringabschnitts 24 zentriert. Eine axiale Sicherung des Scheibenrings 21 erfolgt über sowohl an dem Ringwulst 22 wie an der Innenwandung 23 angeformte Vorsprünge 37, 29, die nicht umlaufend, sondern nur am Umfang an einzelnen Stellen ausgebildet sind, wie dies in Fig. 1 erkannbar ist. Die Scheibendichtung 21 besteht vorzugsweise aus Gummi oder Kunststoff und wird nach Herstellung des Deckels 1 in die in Fig. 3 dargestellte Position eingeknöpft. Wie in Fig. 1 weiterhin ersichtlich ist, bestehen die Ringwulste 22 aus konzentrisch zur Mitte M verlaufenden Wände, die nur in bestimmten Teilabschnitten verlaufen und gleichmäßig am Umfang des Abschnitts 2 verteilt angeordnet sind.

An dem freien Ende des Ringabschnitts 24 des Ringes 14 stehen in den Figuren 1 bis 4 an der zylindrischen Innenwand 23 Befestigungselemente 25 hervor, die mit zur Unterseite 13 des Deckels 1 hin zeigende Abstützflächen 26 aufweisen und die von entgegen der Drehrichtung U in Umfangsrichtung verlaufenden Rampen bzw. Schrägflächen gebildet werden, die gegenüber der horizontalen einen Winkel a bilden. Anstelle der schräg verlaufenden Abstützflächen können diese auch von Stufenflächen gebildet werden.

Wie die Fig. 1 zeigt, sind die Befestigungselemente 25 nur an einzelnen Stellen an dem Ringabschnitt 24 angebracht, vorzugsweise sind es bei diesem Ausführungsbeispiel vier Befestigungselemente 25, von denen das in Fig. 3 auf der rechten Seite dargestellte Befestigungselement 25 in Umfangsrichtung kürzer ist als die restlichen drei Befestigungselemente 25. Dies insbesondere deshalb, um einer Bedienungsperson die Einführung des Deckels 1 in den Verschluß des Arbeitsbehälters 27 zu erleichtern. Die Befestigungselemente 25 bilden mit an der Außenfläche 40 des Arbeitsbehälters 27 angebrachten Verriegelungselementen 30 (in Fig. 2 nur gestrichelt angedeutet) den Drehverschluß zwischen Deckel 1 und Arbeitsbehälter 27, welcher im Ausführungsbeispiel von einem Bajonettverschluß gebildet wird. Hierzu sind zwischen den Befestigungselementen 25 Freiräume, damit die an dem Arbeitsbehälter 27 ausgebildeten Verriegelungselemente 30 dort eingreifen können und beim Drehen des Deckels in Verschließrichtung U die Befestigungselemente 25 mit Vorspannung hintergreifen.

Gemäß den Figuren 1 und 2 ist an der Außenfläche 41 des Ringabschnitts 24 eine Handhabe 31 angeformt, die nach außen verläuft und gemäß Fig. 2 an seiner Unterseite 42 nach außen hin zum Arbeitsbehälter 27 gekrümmt ist, um so der Oberfläche der am Arbeitsbehälter 27 angebrachten Handhabe 45 zu folgen und diese in der Schleißstellung des Deckels 1 zu verdecken.

Nach Fig. 1 ist weiterhin an der Außenfläche 41 des Ringabschnitts 24 ein Betätigungselement 32 angeformt, das an seinem radial äußeren freien Ende einen nach oben in Richtung der Mittellinie 6 (Fig. 2) gerichteten Zapfen 33 trägt, der bei ordnungsgemäßem Verschließen des Arbeitsbehälters 27 einen in der Küchenmaschine ausgebildeten Hebel (nicht dargestellt) betätigt, der wiederum die Stromzufuhr zum elektrischen Antriebsmotor (nicht dargestellt) freigibt, wenn zusätzlich noch der an einer Küchenmaschine angebrachte, von Hand betätigbare Hauptschalter (nicht dargestellt) eingeschaltet ist.

Die Herstellungsweise des Deckels ist folgende:

Zunächst wird der Ring 14 in einem Spritzwerkzeug (nicht dargestellt) ausgeformt. Der Werkstoff für den Ring 14 besteht aus Acrylnitril/Styrol/Acrylester (ASA) und ist weiß eingefärbt. Dieser Werkstoff ist u.a. spülmaschinenfest und hydrolysebeständig, so daß Risse durch Alterung und somit ein Platzen der Ringe vermieden wird. Nachdem der Ring 14 im Formwerkzeug leicht abgekühlt ist, wird er einem zweiten Formwerkzeug zugeführt, in dem dann der scheibenförmige Abschnitt 2 von innen angespritzt wird. Es ist aber auch denkbar, mit Hilfe von zusätzlichen Formstempeln den Ring 14 und den Abschnitt 2 in einem einzigen Formwerkzeug nacheinander zu spritzen.

Wenn das Kunststoffmaterial des Rings 14 noch verhältnismäßig warm ist, geht der Abschnitt 2 mit dem Ring 14 sowohl an der Ring-stufe 4 mit seiner Ausnehmung 7 wie auch an der Ringfläche 5 eine derart innige Verbindung ein, daß diese Schweißnaht praktisch unzertrennlich wird. Die Ausnehmung 7 sorgt dabei, ähnlich wie bei einer Verzahnung, für eine besonders feste Verbindung. Durch das direkte Anspritzen des Abschnitts 2 an den Ring 14 wird auch am Übergang beider Teile an der Oberfläche 3 eine merkliche Naht nahezu vermieden.

Eine besonders innige Verbindung geht dabei der Werkstoff ASA der Ring 14 mit dem Abschnitt 2 ein, wenn der Ring 14 aus ASA und der Abschnitt 2 aus Styrol/Acrylnitril (SAN) besteht. Letzterer Werkstoff ist transparent und läßt die Sicht in den Arbeitsbehälter von außen zu.

Nach Abkühlen beider zusammengefügter Teile 2, 14 ist der Deckel 1 teilweise fertig hergestellt und kann aus dem Formwerkzeug (nicht dargestellt) entnommen werden. Anschließend wird noch die scheibenförmige Ringdichtung 21 in den hierfür vorgesehenen Raum (Fig. 3) eingesetzt, bis dieser die in den Figuren 2 bis 4 dargestellte Position einnimmt und so durch die Stützen 29, 37 gegen Herausfallen gesichert ist. Beim Aufsetzen des kompletten Deckels 1 auf den Arbeitsbehälter 27 (Fig. 2) legt sich der Rand 43 des Arbeitsbehälters 27 an der Unterseite 42 der Scheibendichtung 21 an und wird bei weiterem Drehen des Deckels 1 in Verschließrichtung U soweit zum Deckel 1 herangeführt, daß sich der mittlere Bereich der Scheibendichtung 21 in die Rille 20 elastisch hineinwölbt, bis der Deckel 1 über die Scheibendichtung 21 dichtend mit dem Rand 43 des Arbeitsbehälters 28 verbunden ist. Durch die Rille 20 wird die ansonsten wenig kompresible Scheibendichtung 21 etwas elastischer. Die Schrägen der Abstützflächen 26 sind so bemessen, daß der Deckel 1 stets fest gegen den Rand 43 des Arbeitsbehälters 27 gedrückt und so gut gedichtet werden kann.

## Patentansprüche

1. Deckel (1) zum Verschließen eines Nahrungsmittel aufnehmenden Arbeitsbehälters (27) für eine elektrisch betriebene Küchenmaschine, wobei der Deckel (1) an seinem Rand (14) zum Verriegeln mit dem Arbeitsbehälter (27) angeformte Befestigungselemente (25) aufweist, die mit am Arbeitsbehälter (27) entsprechend ausgebildete Verriegelungselemente (30) einen Drehverschluß derart bilden, daß der Deckel (1) dichtend mit dem Arbeitsbehälter (27) verschließbar ist,
**dadurch gekennzeichnet**,
daß der Deckel (1) aus zumindest zwei Kunststoffteilen (2, 14), einem scheibenförmigen Abschnitt (2) und einem den scheibenförmigen Abschnitt (2) von außen begrenzenden ringförmigen Rand (14) besteht, daß der Rand (14) an dem scheibenförmigen Abschnitt (2) befestigt ist und daß der Rand (14) aus einem Kunststoffmaterial höherer Verschleißfestigkeit besteht als der Kunststoff sowohl des scheibenförmigen Abschnitts (2) des Deckels (1) wie des Arbeitsbehälters (27).

2. Deckel nach Anspruch 1,
**dadurch gekennzeichnet**,
daß der scheibenförmige Abschnitt (2) und der Ring (14) miteinander durch Schweißen formschlüssig verbunden sind.

3. Deckel nach Anspruch 1,
**dadurch gekennzeichnet**,
daß der scheibenförmige Abschnitt (2) und der Ring (14) durch Kleben miteinander verbunden sind.

4. Deckel nach Anspruch 1,
**dadurch gekennzeichnet**,
daß der scheibenförmige Abschnitt (2) und der Ring (14) durch Verspritzen beider Teile miteinander verbunden sind.

5. Deckel nach einem der Ansprüche 2 bis 4,
**dadurch gekennzeichnet**,
daß der scheibenförmige Abschnitt (2) aus dem transparenten Kunststoff Styrol/Acrylnitril (SAN) und der Ring (14) mit seinen Befestigungselementen (25) aus Acrylnitril/Styrol/Acrylester (ASA) besteht.

6. Deckel nach Anspruch 1,
**dadurch gekennzeichnet**,
daß an der Oberseite (3) des scheibenförmigen Abschnitts (2) eine ringförmige Stufe (4, 7) ausgebildet ist, in die ein entsprechend an der Innenseite des Rings (14) ausgebildeter Rand derart eingreift, daß die Außenseite des scheibenförmigen Abschnitts (2) und des Rings (14) bündig abschließen.

7. Deckel nach Anspruch 1,
**dadurch gekennzeichnet**,
daß der Ring (14) im Querschnitt winkelförmig ausgebildet ist und aus zwei Ringabschnitten (16, 24) besteht, daß der erste Ringabschnitt (16) im wesentlichen parallel zum scheibenförmigen Abschnitt (2) und der zweite Ringabschnitt (24) im wesentlichen senkrecht zum scheibenförmigen Abschnitt (2) verläuft und daß an der Innenseite (23) des zweiten Ringabschnitts (24) die Befestigungselemente (25) angeformt sind.

8. Deckel nach Anspruch 7,
**dadurch gekennzeichnet**,
daß an der Außenfläche (41) des zweiten Ringabschnitts (24) eine Handhabe (31) und ein im Winkel dazu verlaufendes Betätigungselement (32) mit Zapfen (33) radial nach außen hervorstehen.

9. Deckel nach Anspruch 1,
**dadurch gekennzeichnet**,
daß am Übergang von dem scheibenförmigen Abschnitt (2) zum Ring (14) eine konzentrisch zum Deckel (1) verlaufende ringförmige Rille (8) ausgebildet ist und daß an den die Rille (8) begrenzenden Stirnflächen sowohl am Ring (14) wie am scheibenförmigen Abschnitt (2) eine ringförmige Scheibendichtung (21) derart anliegt, daß zwischen Scheibendichtung (21) und Rille (8) ein Freiraum vorhanden ist.

## Claims

1. Lid (1) for closing a vessel (27) for use with an electrically operated kitchen machine in which food is stored, wherein the lid (1) for locking engagement with the vessel (27) includes at its edge (14) attachment elements (25) which provide a turning lock with mating locking elements (30) shaped on the vessel (27) in such a fashion that the lid (1) can sealingly close the vessel (27),
**characterized** in that the lid (1) is composed of at least two plastic components (2, 14), a plate-shaped portion (2) and an annular edge (14) which defines the plate-shaped portion (2) from outwards, in that the edge (14) is attached to the plate-shaped portion (2), and in that the edge (14) is made of a plastic material having a higher resistance to wear than the plastic material of which both the plate-shaped portion (2) of the lid (1) and the vessel (27) are made of.

2. Lid as claimed in claim 1,
**characterized** in that the plate-shaped portion (2) and the ring (14) are form-lockingly connected to each other by welding.

3. Lid as claimed in claim 1,
**characterized** in that the plate-shaped portion (2) and the ring (14) are connected to each other by cementing.

4. Lid as claimed in claim 1,
**characterized** in that the plate-shaped portion (2) and the ring (14) are connected to each other by injection-moulding of both components.

5. Lid as claimed in any one of claims 2 to 4,
**characterized** in that the plate-shaped portion (2) is made of the transparent plastic material styrene/acrylonitrile (SAN) and the ring (14) with its attachment elements (25) is made of acrylonitrile/styrene/ acrylate (ASA).

6. Lid as claimed in claim 1,
**characterized** in that provided on the top side (3) of the plate-shaped portion (2) is an annular step (4, 7) into which an edge that is matingly configured on the inside of the ring (14) is engaged in such a fashion that the outside of the plate-shaped portion (2) and that of the ring (14) end flush with one another.

7. Lid as claimed in claim 1,
**characterized** in that the ring (14) has an angular design in cross-section and is made of two annular portions (16, 24), in that the first annular portion (16) extends generally in parallel to the plate-shaped portion (2) and the second annular portion (24) extends generally vertically to the plate-shaped portion (2), and in that the attachment elements (25) are shaped on the inside (23) of the second annular portion (24).

8. Lid as claimed in claim 7,
**characterized** in that projecting radially outwardly from the outside surface (41) of the second annular portion (24) are a handle (31) and an actuating element (32) with pin (33) which extend at angles relative thereto.

9. Lid as claimed in claim 1,
**characterized** in that an annular groove (8) which extends concentrically relative to the lid (1) is provided at the transition from the plate-shaped portion (2) to the ring (14), and in that an annular plate-shaped seal (21) abuts on the end surfaces defining the groove (8), both on the ring (14) and on the plate-shaped portion (2), in such a fashion as to provide a free space between the plate-shaped seal (21) and the groove (8).

## Revendications

1. Couvercle (1) pour fermer un récipient de travail (27) recevant des aliments, pour un robot de cuisine électrique, le couvercle (17) présentant sur son bord (14) des éléments de fixations (25) formés sur le récipient de travail (27) pour le verrouillage, lesquels forment, conjointement avec des éléments de verrouillage (30) réalisés de manière correspondante sur le récipient de travail (27), une fermeture par rotation de telle sorte que le couvercle (1) est susceptible d'être fermé de manière étanche avec le récipient de travail (27), caractérisé en ce que le couvercle (1) est constitué par au moins deux pièces (2, 14) de matière plastique, un tronçon (2) en forme de disque et un bord (14) annulaire délimitant depuis l'extérieur le tronçon (2) en forme de disque, en ce que le bord (14) est fixé sur le tronçon (2) en forme de disque et en ce que le bord (14) est constitué par une matière plastique dont la résistance à l'usure est plus forte non seulement que la matière plastique du tronçon (2) en forme de disque du couvercle (1) mais aussi que celle du récipient de travail (27).

2. Couvercle selon la revendication 1, caractérisé en ce que le tronçon (2) en forme de disque et l'anneau (14) sont reliés l'un à l'autre par soudure, par coopération de formes.

3. Couvercle selon la revendication 1, caractérisé en ce que le tronçon (2) en forme de disque et l'anneau (14) sont reliés l'un à l'autre par collage.

4. Couvercle selon la revendication 1, caractérisé en ce que le tronçon (2) en forme de disque et l'anneau (14) sont reliés l'un à l'autre par injection des deux pièces.

5. Couvercle selon l'une quelconque des revendications 2 à 4, caractérisé en ce que le tronçon (2) en forme de disque est en acrylonitrile-styrène (SAN) transparent et l'anneau avec ses éléments de fixation (25) sont en ester acrylique d'acrylonitrile-styrène (ASA).

6. Couvercle selon la revendication 1, caractérisé en ce que sur la face supérieure (3) du tronçon (2) en forme de disque est réalisé un gradin (4, 7) annulaire dans lequel s'engage un bord réalisé de manière correspondante sur la face intérieure de l'anneau (14) de telle sorte que la face extérieure du tronçon (2) en forme de disque et celle de l'anneau (14) se raccordent en affleurement.

7. Couvercle selon la revendication 1, caractérisé en ce que l'anneau (14) a une section de forme angulaire et est constitué par deux tronçons d'anneau (16, 24), en ce que le premier tronçon d'anneau (16) est sensiblement parallèle au tronçon (2) en forme de disque et le second tronçon annulaire (24) est sensiblement perpendiculaire au tronçon (2) en forme de disque, et en ce que les éléments de fixation (25) sont moulés sur la face intérieure (23) du second tronçon annulaire (24).

8. Couvercle selon la revendication 7, caractérisé en ce que sur la surface extérieure (41) du second tronçon annulaire (24) un élément de maniement (31) et un élément d'actionnement (32) s'étendant en angle par rapport à celui-ci, avec des tenons (33), dépassent radialement vers l'extérieur.

9. Couvercle selon la revendication 1, caractérisé en ce qu'à la transition entre le tronçon (2) en forme de disque et l'anneau (14) est réalisée une rainure (8) annulaire s'étendant de manière concentrique par rapport au couvercle (1), et en ce que sur les faces frontales délimitant la rainure (8) un joint en forme de disque circulaire (21) est en appui non seulement sur l'anneau (14), mais aussi sur le tronçon (2) en forme de disque, de sorte qu'il existe un espace libre entre le joint en forme de disque (21) et la rainure (8).
